# FASCICULE DE BREVET EUROPEEN

(11) **EP 1 847 707 B1**
(45) Date de publication et mention de la délivrance du brevet: **28.11.2012**
(21) Numéro de dépôt: 07015678.1
(22) Date de dépôt: 09.06.2005
(51) Int. Cl.: F02K 1/76

(54) **Système d'actionnement de deux capots mobiles d'un inverseur de poussée, et inverseur de poussée équipé d'un tel système**
Betätigungssystem für zwei mobile Hauben eines Schubumkehrers, und mit einem solchen System versehener Schubumkehrer
Actuation system for two mobile cowls of a thrust reverser, and thrust reverser equipped with such a system

(30) Priorité: 29.06.2004 FR 0407096
(43) Date de publication de la demande: 24.10.2007
(62) Demande divisionnaire de: 05775396.4
(73) Titulaire: Aircelle, 76700 Gonfreville l'Orcher (FR)
(72) Inventeur: Dehu, Michel Philippe, 31170 Tournefeuille (FR); Metezeau, Fabrice Henri Emile, 76290 Montivilliers (FR); Baudu, Pierre André Marcel, 76280 Criquetot L'Esneval (FR); Le Coq, Vincent, 14600 La Riviere Saint Sauveur (FR)
(74) Mandataire: Gaillarde, Frédéric F. Ch.

(56) Documents cités:
- FR-A1- 2 537 236

## Description

La présente invention se rapporte à système d'actionnement de deux capots mobiles d'un inverseur de poussée, et à un inverseur de poussée équipé d'un tel système.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. Cependant, de tels systèmes requièrent une maintenance importante car la moindre fuite dans le réseau hydraulique ou pneumatique peut avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

FR 2537236 décrit un système d'actionnement de deux capots mobiles d'un inverseur de poussée selon le préambule de la revendication 1.

La présente invention a notamment pour but de fournir un agencement particulièrement fiable de tels actionneurs électromécaniques.

On atteint ce but de l'invention avec un système d'actionnement de deux capots mobiles d'un inverseur de poussée, comprenant :
- pour chaque capot, un vérin central et deux vérins additionnels,
- un moteur, et
- des arbres de transmission flexibles, disposés d'une part entre ledit moteur et lesdits vérins centraux, et d'autre part entre chaque vérin central et ses deux vérins additionnels associés.

Grâce à cet agencement particulier, la rupture d'un arbre de transmission flexible entre deux vérins associés à un même capot permet à deux vérins sur trois de continuer à fonctionner, et ne remet donc pas en question la possibilité d'actionner ce capot.

Suivant une autre caractéristique optionnelle de l'invention, ledit moteur est électrique.

Suivant une caractéristique optionnelle du système selon l'invention, ledit moteur électrique est un moteur synchrone autopiloté : un tel moteur est particulièrement bien adapté à l'invention car il est apte à recevoir une commande de couple ou de vitesse.

Suivant d'autres caractéristiques optionnelles du système selon l'invention :
- ce système comprend des moyens pour limiter la vitesse desdits capots au début de leur phase d'ouverture : en limitant la vitesse d'ouverture du capot mobile en début de course, et plus précisément jusqu'à dépassement des pièces sensibles, la puissance d'un choc sera limitée à ce que peuvent supporter ces pièces sensibles sans qu'il soit nécessaire de les surdimensionner pour qu'elles puissent résister à un choc se produisant à vitesse élevée et puissance élevée ;
- lesdits moyens de limitation de vitesse comprennent une interface de commande et des moyens pour compter le nombre de tours effectués par l'un des arbres de transmission flexibles reliés audit moteur ;
- lesdits moyens de comptage de tour comprennent un résolveur.

La présente invention se rapporte également à un inverseur de poussée équipé d'un système conforme à ce qui précède.

La mise en oeuvre de l'invention sera mieux comprise à l'aide de la description détaillée qui est exposée ci-dessous en regard du dessin annexé dans lequel :
La figure 1 est une vue schématique partielle en perspective d'une nacelle intégrant un inverseur de poussée à grille.
La figure 2 est une représentation schématique des capots mobiles et de leur système d'actionnement
La figure 3 est un diagramme représentant les étapes de fonctionnement d'un procédé de commande du système selon l'invention.

Avant de décrire en détail un mode de réalisation de l'invention, il est important de préciser que le système et le procédé décrits ne sont pas limités à un type d'inverseur en particulier. Bien qu'illustrée par un inverseur à grilles comprenant des capots mobiles coulissant le long de rails, l'invention pourra être mise en oeuvre avec des inverseurs de conception différentes, notamment à portes. Par ailleurs, le principe de la limitation de vitesse au début de l'ouverture des capots mobiles peut être appliqué sur toute sorte de moteur d'actionnement des capots mobiles, un moteur électrique n'étant que plus facile à commander.

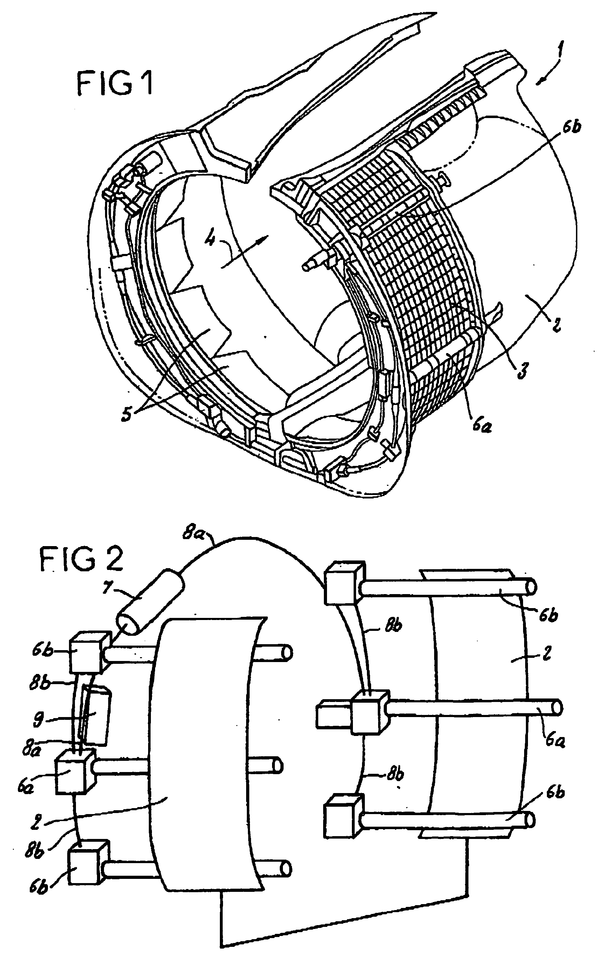

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser le long de rails (non visibles) pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 sur les rails le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté le long de ses rails sous l'action de trois vérins 6a, 6b, comprenant un vérin central 6a et deux vérins additionnels 6b, actionnés par un unique moteur électrique 7 relié à une interface de commande 9. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Un moteur synchrone autopiloté est un moteur électrique 7 particulièrement bien adapté à un procédé selon l'invention car apte à recevoir une commande de couple ou de vitesse. Son fonctionnement repose sur l'interaction entre un champ magnétique rotorique et un champ magnétique statorique tournant. Dans un tel moteur électrique 7, un capteur détecte la position exacte du rotor et permet à un convertisseur de fréquence de maintenir un angle entre le rotor et le champ tournant statorique égal à 90° de façon à ce que le couple moteur soit toujours maximal. Une modulation de l'amplitude du champ tournant statorique fixe la valeur du couple moteur. Le capteur donne également une information sur la vitesse de rotation du moteur électrique 7.

Le contrôle du couple délivré et de la vitesse de rotation d'un tel moteur électrique 7 est simple. Pour que la vitesse reste constante en cas de diminution ou augmentation de charge, il faut diminuer ou augmenter le couple moteur. L'amplitude du champ tournant statorique sera donc réduite ou augmentée mais la fréquence du champ ne sera pas modifiée. Pour que le couple reste constant, il convient de diminuer la vitesse tout en maintenant l'amplitude du champ statorique. Un variateur réduit la fréquence du champ statorique, en conservant son amplitude.

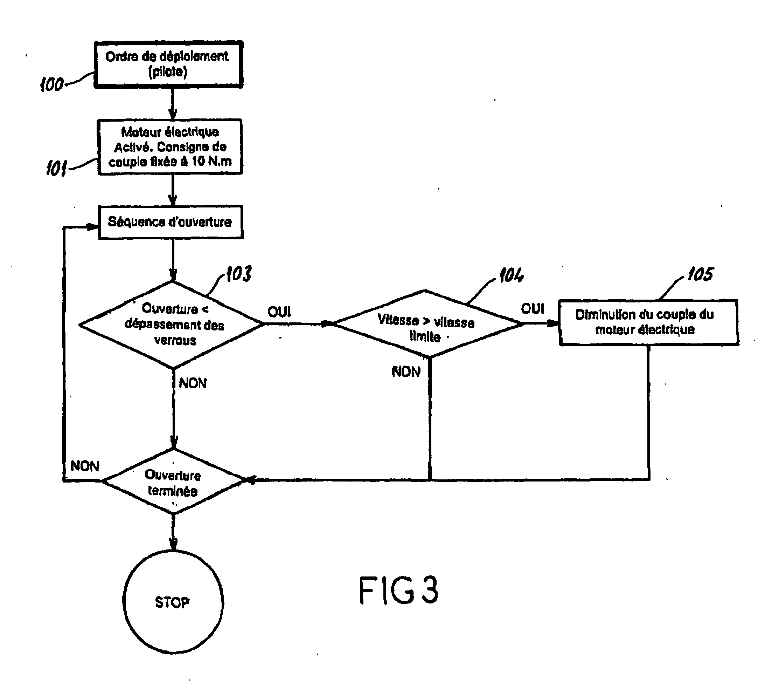

Un diagramme montrant les étapes d'un procédé de commande du système selon l'invention pour l'ouverture en condition normale de l'inverseur de poussée 1 est représenté à la figure 3.

Initialement, l'ordre 100 est donné par le pilote de déployer l'inverseur. Le moteur électrique 7 est activé au cours d'une étape 101 qui lui fixe une consigne de couple égale à 10 N.m par exemple. Suit alors une séquence d'ouverture déterminée provoquant l'ouverture des capots mobiles 2.

La séquence comprend également deux sous-étapes de test 103, 104, formant une étape de bridage du moteur électrique 7, consistant à régulièrement analyser respectivement le déplacement du capot mobile 2 puis la vitesse de rotation du moteur électrique 7.

Si lors de l'étape de test 103, il apparaît que le capot mobile n'a pas dépassé la position des verrous, alors l'étape de test 104 est appliquée, sinon la séquence d'ouverture se poursuit normalement jusqu'à son terme, quand le capot mobile est totalement ouvert. L'analyse du déplacement des capots mobiles 2 permet donc de n'appliquer la limitation de vitesse qu'en début d'ouverture. En pratique, le déplacement des capots mobiles 2 est obtenu au moyen d'un résolveur terminant l'arbre de transmission flexible 8a et permettant de compter le nombre de tours effectué par ce dernier. D'autres moyens sont cependant tout à fait envisageables.

Suite à l'étape de test 103, l'étape de test 104 analyse donc la vitesse de rotation du moteur électrique 7, représentative de la vitesse d'ouverture du capot mobile 2. Si la vitesse de rotation du moteur électrique 7 est supérieure à la vitesse limite prédéterminée, alors un ordre 105 fixe une consigne de couple plus basse au moteur électrique 7. En diminuant le couple délivré par le moteur électrique 7 alors que les charges à vaincre restent constantes, sa vitesse diminue également.

Il est également possible de prévoir une sous-étape consistant à tester si la vitesse des rotation est inférieure à la vitesse limite préfixée de manière à obtenir une régulation de la vitesse maintenant cette dernière au plus près de la valeur limite, évitant de ce fait une limitation trop importante de la vitesse entraînant une perte de temps inutile.

Une fois cette étape de test 104 complétée et éventuellement une nouvelle consigne de couple fixée, le procédé reprend la séquence d'ouverture jusqu'à son terme.

## Revendications

1. Système d'actionnement de deux capots mobiles (2) d'un inverseur de poussée (1), comprenant:
- pour chaque capot (2), un vérin central (6a) et deux vérins additionnels (6b),
- un moteur (7), et
- des arbres de transmission flexibles (8a), disposés entre ledit moteur (7) et lesdits vérins centraux (6a), **caractérisé par** des arbres de transmission flexibles (8b) disposés entre chaque vérin central (6a) et ses deux vérins additionnels associés (6b).

2. Système selon la revendication 1, dans lequel ledit moteur (7) est électrique.

3. Système selon la revendication 2, dans lequel ledit moteur électrique (7) est un moteur synchrone autopiloté.

4. Système selon l'une quelconque des revendications 1 à 3, comprenant en outre des moyens pour limiter la vitesse desdits capots (2) au début de leur phase d'ouverture.

5. Système selon la revendication 4, **caractérisé en ce que** lesdits moyens de limitation de vitesse comprennent une interface de commande (9) et des moyens pour compter le nombre de tours effectués par l'un des arbres de transmission flexibles (8a) reliés audit moteur (7).

6. Système selon la revendication 5, **caractérisé en ce que** lesdits moyens de comptage de tour comprennent un résolveur.

7. Inverseur de poussée (1) équipé d'un système conforme à l'une quelconque des revendications précédentes.

## Claims

1. An actuation system for two mobile cowls (2) of a thrust reverser (1), comprising:
- for each cowl (2), a central actuator cylinder (6a) and two additional actuator cylinders (6b),
- a motor (7), and
- flexible transmission shafts (8a), positioned between said motor (7) and said central actuator cylinders (6a), **characterized by** flexible transmission shafts (8b) positioned between each central actuator cylinder (6a) and its two associated additional actuator cylinders (6b).

2. The system according to claim 1, wherein said motor (7) is an electric motor.

3. The system according to claim 2, wherein said electric motor (7) is a self-driven synchronous motor.

4. The system according to any of claims 1 to 3, further comprising means for limiting the velocity of said cowls (2) at the beginning of their opening phase.

5. The system according to claim 4, **characterized in that** said velocity limiting means comprise a control interface (9), and means for counting the number of revolutions performed by one of the flexible transmission shafts (8a) connected to said motor (7).

6. The system according to claim 5, **characterized in that** said means for counting revolutions comprise a resolver.

7. A thrust reverser (1) equipped with a system according to any of the preceding claims.

## Patentansprüche

1. Betätigungssystem für zwei mobile Hauben (2) eines Schubumkehrers (1), umfassend:
- für jede Haube (2), einen zentralen Zylinder (6a) und zwei zusätzliche Zylinder (6b),
- einen Motor (7) und
- flexible Übertragungswellen (8a), die zwischen dem Motor (7) und den zentralen Zylindern (6a) angebracht sind; **gekennzeichnet durch** flexible Übertragungswellen (8b), die zwischen jedem zentralen Zylinder (6a) und seinen zwei assoziierten zusätzlichen Zylindern (6b) angebracht sind.

2. System nach Anspruch 1, wobei der Motor (7) elektrisch ist.

3. System nach Anspruch 2, wobei der elektrische Motor (7) ein selbstgesteuerter synchroner Motor ist.

4. System nach einem der Ansprüche 1 bis 3, umfassend außerdem Mittel, um die Geschwindigkeit der Hauben (2) am Beginn ihrer Öffnungsphase zu begrenzen.

5. System nach Anspruch 4, **dadurch gekennzeichnet, dass** die Mittel zur Begrenzung der Geschwindigkeit eine Steuerschnittstelle (9) umfassen und Mittel, um die Anzahl der Umdrehungen zu zählen, die von einer der flexiblen Übertragungswellen (8a), die mit dem Motor (7) verbunden sind, durchgeführt werden.

6. System nach Anspruch 5, **dadurch gekennzeichnet, dass** die Mittel zur Zählung der Umdrehungen einen Resolver umfassen.

7. Schubumkehrer (1), ausgestattet mit einem System gemäß einem der vorhergehenden Ansprüche.
